# EUROPEAN PATENT SPECIFICATION

(11) **EP 2 946 851 B1**
(45) Date of publication and mention of the grant of the patent: **09.01.2019**
(21) Application number: 15167105.4
(22) Date of filing: 11.05.2015
(51) Int. Cl.: B22D 11/128

(54) **A ROLL MODULE FOR A ROLL LINE OF A CONTINUOUS CASTING MACHINE**
WALZMODUL FÜR WALZLINIE EINER STRANGGUSSMASCHINE
MODULE DE ROULEAU POUR UNE LIGNE DE ROULEAUX D'UNE MACHINE DE COULÉE CONTINUE

(30) Priority: 23.05.2014 SE 1450619
(43) Date of publication of application: 25.11.2015
(73) Proprietor: Aktiebolaget SKF, 415 50 Göteborg (SE)
(72) Inventor: Anundsson, Jesper, SE-437 41 Lindome (SE); Mitchell, Erik, SE-436 51 Hovås (SE)
(74) Representative: Kuhstrebe, Jochen

(56) References cited:
- EP-A1- 1 537 927
- DE-A1- 10 202 525

## Description

### TECHNICAL FIELD

The present disclosure relates to continuous casting of metal, in particular continuous casting of steel. More precisely, the present disclosure relates to a roll line of a continuous casting machine comprising at least two roll modules.

### BACKGROUND

Continuous casting of metal (and in particular steel) is a well known process and characterized by its high efficiency in producing steel. It is also known to be a very demanding process for all components of the continuous casting machine since the steel process also is characterized by its very harsh environment with high temperatures, high loads from the steel slab, highly corrosive environment etc. The demanding nature of this process has resulted in that many of the components of the continuous casting machine frequently needs to be refurbished and/or replaced by new components. Examples of components that have to be replaced and/or refurbished are for instance the rolling bearings of the roll lines in the machine, roll mantles of the roll lines, shafts of the roll lines etc. This service can be very costly and also time consuming. For example, the roll lines often needs to be dismounted into several parts to be able to carry out the service needed or the whole roll line, including several roll mantles, shaft, support blocks etc. has to be removed from the machine for servicing.

One example of a known roll line design can be found in EP1537927A1, which regards a segment roll for a continuous casting machine. The segment roll incorporates a number of roll segments axially spaced apart and supported in bearings on a non-rotating shaft, whereby each roll segment incorporates a sleeve-shaped mantle with associated sealing means, wherein each roll segment is designed as a self-contained unit having an internal sleeve, that there at each axial end of the roll segment is a recess for accommodating bearings and sealing means, and that the roll segments are arranged to be mounted on the shaft with the internal sleeve thereof in non-rotatable contact with the shaft. For instance, when there is a need to service at least one of the parts in this segment roll, or roll line, the whole roll line has to be replaced from the continuous casting machine.

### SUMMARY OF THE INVENTION

An object of the invention is to propose a new design which 1) facilitates servicing of the roll line, 2) increases the flexibility for the continuous casting machine and 3) facilitates and reduces the risk during transporting of the roll line components.

According to the invention, the objects are achived by a roll line for a continuous casting machine comprising at least two roll modules. Each roll module comprises a shaft extending in an axial direction and presenting a first and a second axial end, a roll mantle presenting a cylindrically shaped outer peripheral surface extending in an axial direction and a cylindrically shaped inner peripheral surface extending in the same axial direction, wherein the roll mantle further presents a first and a second axial end. Furthermore, the roll module comprises a first and a second bearing mounted in-between the shaft and the inner peripheral surface of the roll mantle, such that the first and second bearing allows a relative rotation between the shaft and the roll mantle, wherein the first and second axial end of the shaft is extending axially outside the first and second axial end of the roll mantle respectively, such that the shaft presents a first and a second axially extending shaft protrusion. The roll module further comprises a first and a second locking means for axially locking the first and second bearing and the roll mantle to the shaft, the first and second locking means being located at least partly on the first and second respective shaft protrusion, wherein the first locking means intersect a plane being orthogonal to the axial direction of the shaft and axially located at the first axial end of the roll mantle, and wherein the second locking means intersect a plane being orthogonal to the axial direction of the shaft and axially located at the second axial end of the roll mantle. This design results in a self-contained roll module which can be easily interchanged with another refurbished or new roll module in a roll line of the contonous casting machine. Thus, there is no need to replace the full roll line when there is a need of replacing or refurbishing one of the roll mantles on the roll line, or any other component of the roll module. In prior art solutions, there is always a need to either dismount the roll line into several parts, to open up the roll line making it vulnerable for contaminants, and/or to remove the complete roll line when there is a need for service. Due to this new design, the cost for servicing will be reduced, especially since roll modules which are not needed to be refurbished can be kept in the continuous casting machine and only the modules where refurbishing is needed will be removed. In addition, the easier handeling of the roll module is due to that the module is a self-contained unit where the bearings and the roll mantle are locked and fixed to the shaft by the locking means. Moreover, transporting will be facilitated since the roll module will be a smaller and more compact unit compared to a full roll line and also since the roll module is a self-contained unit. Other advantages are that the components of the roll module can be mounted outside and before entering the continuous casting plant. This leads to that for instance the bearings can be mounted correctly in-between the shaft and roll mantle and locked therein by and via the locking means. As is well known, it is very important to mount bearings correctly. If the bearings are not mounted correctly there is a large risk that the service life of the bearings is significantly reduced. By the roll module design proposed by the inventor any such issues with improperly mounted bearings are significantly reduced.

In an embodiment, a roll module is presented, which comprises sealing means located axially outside the first and second bearing for sealing off a space between the inner peripheral surface and the shaft, thereby creating a self-contained sealed unit. An advantage of having seals as proposed is that no contaminants will be able to enter into the area where the bearings are located. Also it can keep lubrication within the inner space between the inner peripheral surface of the roll mantle and the shaft. Bearings are vulnerable and sensitive to any contaminants, such as water, dirt, debris etc. Thereby, this further facilitates transporting and handeling of the roll module, and also will lead to an increased service life when in operation in the continuous casting machine. In a further embodiment, at least one of the sealing means is integrated with its corresponding locking means. For instance, if the locking means is sleeve shaped the sleeve could be used as a sealing surface onto which a sealing ring acts, such as a labyrinth seal ring.

In an embodiment, a roll module is presented, wherein the first and second axial shaft protrusion is meant to be received in a first and second corresponding support block. The support blocks are support blocks in the continuous casting machine for securing and fastening the roll module in the machine.

In an embodiment, a roll module is presented, wherein at least one of the first and second locking means is a cylindrically shaped sleeve member.

In an embodiment, a roll module is presented, wherein the shaft presents an essentially similar diameter along its axial extension.

In an embodiment, a roll module is presented, wherein at least one of the first and second locking means is axially locked to the shaft via a side face of the respective first or second axial end of the shaft.

In an embodiment, a roll module is presented, wherein at least one of the locking means is in the form of a cap, or "hat" meant to cover an essential part of its corresponding shaft protrusion. The cap may be made in one piece, but it may also be made in several pieces. For instance the cap may be made by a sleeve shaped member with its inner envelope surface mounted onto the outer peripheral surface of the corresponding shaft protrusion and an essentially round-shaped end plate mounted to the end face of the corresponding shaft protrusion of the shaft.

In an embodiment, a roll module is presented, wherein an axial side face of at least one of the first or second axial end of the shaft presents a rotational fixation means meant to be rotationally fixed to another corresponding shaft of another roll module.

In an embodiment, a roll module is presented, wherein the roll module is filled with a lubricant in the space axially inside the sealing means. The lubricant is meant to lubricate the e.g. the rolling bearings. In another embodiment, a lubricated and sealed roll module is presented, wherein the roll module is relubrication free. This further leads to that the roll module is a self-contained unit and that the roll module can be assembled completely and remotely from the continuous casting machine with the right specifications, and further the roll module assembly can be made correctly without any risk of entry of contaminants etc. from the continuous casting machine into the roll module.

According to the invention, a roll line for a continuous casting machine is presented, which comprises at least two roll modules, wherein the roll modules are subsequently located along an axial line and wherein the at least two roll modules are supported in two end support blocks and at least one intermediate support block. The roll line may comprise two roll modules, three, four or even more roll modules subsequently located in an axial line. There will be two end support blocks and the number of intermediate support block in the roll line will be the number of roll modules minus one, i.e. if there are three roll modules in the roll line there will be two intermediate support blocks, and if there are four roll modules in the roll line there will be three intermediate support blocks for supporting the roll modules.

According to the invention, a roll line is presented, wherein the at least one intermediate support block presents an axial through-hole for receiving two opposing shaft protrusions of two of the at least two roll modules.

In an embodiment, a roll line is presented, wherein there is an axial clearance between the two opposing shaft protrusions in the through-hole. The axial clearance will allow the adjacently located shafts of the corresponding roll modules to expand axially due to temperature variations in the continuous casting machine without contacting each other. The support blocks may therefore be designed in such a way so that when inserting the adjacent shafts of the corresponding roll modules a certain axial clearance is present. The shaft end protrusions of the two adjacently located roll modules in the roll line may for instance have a total length which is shorter that the total length of the axial through-hole of the intermediate support block.

In an embodiment, a roll line is presented, wherein two of the at least two roll modules which are supported in the end support blocks are axially fixed in the end support blocks.

### BRIEF DESCRIPTION OF DRAWINGS

Exemplifying embodiments of the present invention will now be described in more detail, with reference to the accompanying drawings, wherein:
Figure 1 shows a cross sectional view of a roll module according to an embodiment of the invention.
Figure 2 shows a three dimensional cross sectional view of a roll module according to an embodiment of the invention.
Figure 3 shows a three dimensional enlarged cross sectional view of an end section of a roll module according to an embodiment of the invention.
Figure 4 shows a cross sectional view of a roll line according to an embodiment of the invention.

The drawings show diagrammatic exemplifying embodiments of the present invention and are thus not drawn to scale. It shall be understood that the embodiments shown and described are exemplifying and that the invention is not limited to these embodiments. It shall also be noted that some details in the drawings may be exaggerated in order to better describe and illustrate the invention.

### Reference Numerals:

- 1:: Roll module
- 10:: Roll line
- 2:: Shaft
- 21:: First axial end of shaft
- 22:: Second axial end of shaft
- 23:: First shaft protrusion
- 24:: Second shaft protrusion
- 3:: Roll mantle
- 31:: Roll mantle outer peripheral surface
- 32:: Roll mantle inner peripheral surface
- 33:: First axial end of roll mantle
- 34:: Second axial end of roll mantle
- 41:: First bearing
- 42:: Second bearing
- 51:: First locking means
- 511, 512:: Rotational fixing means
- 52:: Second locking means
- 61, 62:: Sealing means
- 71, 72:: Intermediate support blocks
- 73, 74:: End support blocks
- 8:: Bearing spacer sleeve
- 81, 82:: Bearing dismounting rings
- 83:: Axial side face of sleeve 8101, 102: Axial clearance

### DETAILED DESCRIPTION OF THE DRAWINGS

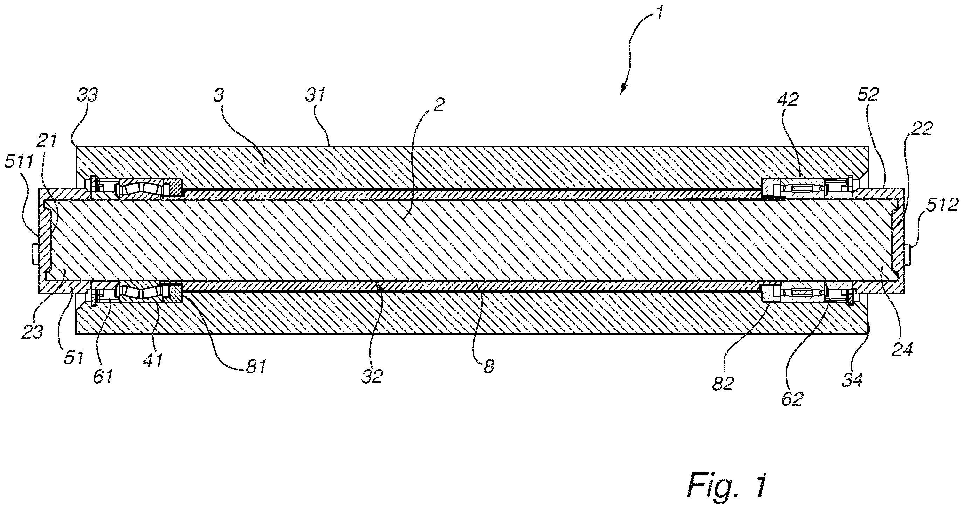

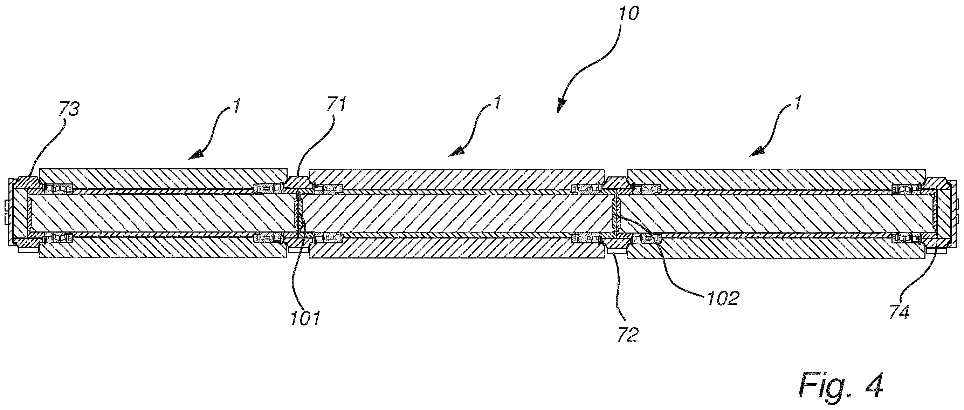

Referring to the drawings, figure 1 illustrates an embodiment of a roll module 1 for a roll line 10 (see fig. 4) of a continuous casting machine (not shown) according to the the invention. The roll module 1 comprises a shaft 2 extending in an axial direction and presenting a first and a second axial end 21 and 22. Further, the roll module 1 comprises a roll mantle 3, which presents a cylindrically shaped outer peripheral surface 31 also extending in an axial direction and a cylindrically shaped inner peripheral surface 32 extending in the same axial direction, wherein the roll mantle 3 further presents a first and a second axial end 33 and 34. In addition, a first and a second bearing 41 and 42 are mounted in-between the shaft 2 and the inner peripheral surface 32 of the roll mantle 3, such that the first and second bearings 41 and 42 allow a relative rotation between the shaft 2 and the roll mantle 3. The bearings in this embodiment are a spherical roller bearing (ref. to ref. num. 41) and a toroidal roller bearing (ref. to ref. num. 42). Of course, the roll module 1 may be equipped with any other kind of bearing which is considered suitable by a skilled person. For example, the roll module 1 may be equipped with tapered roller bearings or cylindrical roller bearings. The advantage of using a spherical roller bearing 41 and a toroidal roller bearing 42 is that these bearings can accommodate deflections of the shaft 2 since the outer rings and the inner rings of the bearings can be misaligned. In addition, the toroidal roller bearing 42 further allows its inner and outer ring to be relatively displaced in the axial direction. Thus, shaft expansions/reductions due to temperature variations will not result in any increased forces in the bearings since the outer and inner rings of the toroidal roller bearing 42 will be axially displaced if/when the shaft length increases or decreases. This capability of these bearings 41 and 42 will increase the bearing service life, and consequently it may increase the service life of the roll module 1.The first and second axial end of the shaft 21 and 22 is extending axially outside the first and second axial end 33 and 34 of the roll mantle respectively, such that the shaft 2 presents a first and a second axially extending shaft protrusion 23 and 24. Moreover, the roll module 1 further comprises a first and a second locking means 51 and 52 for axially locking the first and second bearing 41 and 42 and the roll mantle 3 to the shaft 2. The first and second locking means 51 and 52 are located at least partly on the first and second respective shaft protrusion 23 and 24, wherein the first locking means 51 intersect a plane being orthogonal to the axial direction of the shaft and axially located at the first axial end of the roll mantle, and wherein the second locking means 52 intersect a plane being orthogonal to the axial direction of the shaft and axially located at the second axial end of the roll mantle. In this specific embodiment, the locking means 51 and 52 are designed as one-piece caps. The locking means 51 and 52 may of course be designed differently. For instance the cap may be divided into several parts, such as several sleeves with or without and axial end face portion, and also wherein at least one of these sleeves also acts as a sealing surface. The locking may take place at the axial end face of the shaft but it may also be locked in any other suitable way. The location and design of the locking means 51 and 52 leads to an increased compactness of the roll line 1. The compactness is an important advantage of the design since it e.g. will facilitate the roll module 1 to be mounted into its roll line 10. Further, it is important to be able to have an as large as possible outer peripheral surface 31 in relation to the full axial length of the roll module 1. Thereby the distance between two adjacently located outer peripheral surfaces 31 of two roll modules in a roll line will be kept at a minimum. The compactness of this roll module 1 will lead to a large supporting surface for the steel slab, which is good for the steel slab quality. Further in this embodiment, sealing elements 61 and 62 are located axially between the corresponding locking means 51 and 52 and the corresponding bearings 41 and 42. The sealing elements 61 and 62 will seal the inner regions of the roll module 1 in-between the roll mantle 3 and the shaft 2. The roll module 1 may advantageously be pre-greased and relubrication free. In this embodiment, the locking means 51 and 52 and the sealing means 61 and 62 are separate components. However, the sealing means 61 and 62 may also be integrated with its corresponding locking means 51 and 52. For instance, the sleeve shaped part of the locking means 51 and/or 52 may be used as a sealing surface onto which a sealing ring acts. Moreover, in this embodiment, the roll module 1 presents a spacer sleeve 8 located in-between the roll mantle 3 and the shaft 2 as seen in the figure. In addition, the roll module presents two bearing dismounting rings 81 and 82. These rings 81 and 82 are designed to be able to push against the outer and inner rings of the bearings 41 and 42 respectively. This will facilitate dismounting of the roll module 1. By pushing on the sleeve 8 in one direction either the ring 81 or the ring 82 will push on its corresponding bearing 41 or 42 and thereby move the bearing so that it will be dismounted from the shaft 2. This is especially important for toroidal roller bearings since a toroidal roller bearing may get stuck if the bearing is dismounted by pusing on only one of its outer or inner ring. In an embodiment (not shown) there is only one dismounting ring located at one of the bearings. Thus, if one of the bearings not needs a dismounting ring due to its design there may only be a need for one dismounting ring. In another embodiment, there are no dismounting rings and also no dismounting sleeve. The embodiment in figure 1 further presents two rotational fixation means 511 and 512 on the locking means 51 and 52. These are meant to be able to plug in to holes of e.g. other locking means of other roll modules in a roll line and to thereby rotationally lock the roll modules' shafts relative each other. For example, these may be configured by a plug and socket design or any other suitable design that would fix the roll modules' shafts rotationally.

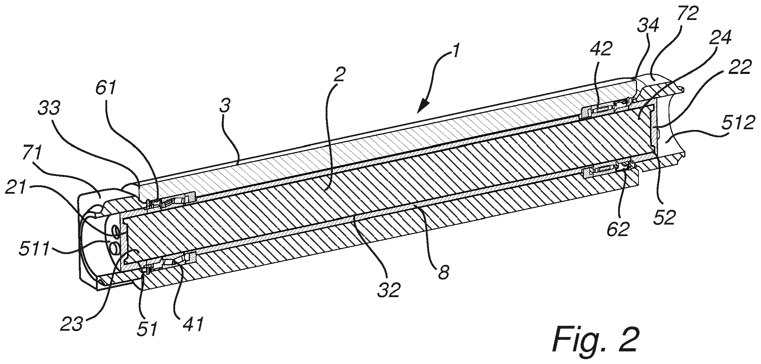

Figure 2 shows a three dimensional cross sectional view of a roll module 1 according to an embodiment of the invention and also as presented in figure 1. In this embodiment it can also be seen how the roll module is mounted into intermediate support blocks 71 and 72, which form part of a roll line 10, as is shown in figure 4 and further described below. Further in this figure it can be seen that the rotational fixation means 511 on the locking means 51 also comprises a hole into which a corresponding plug from another locking means of another roll module can be inserted.

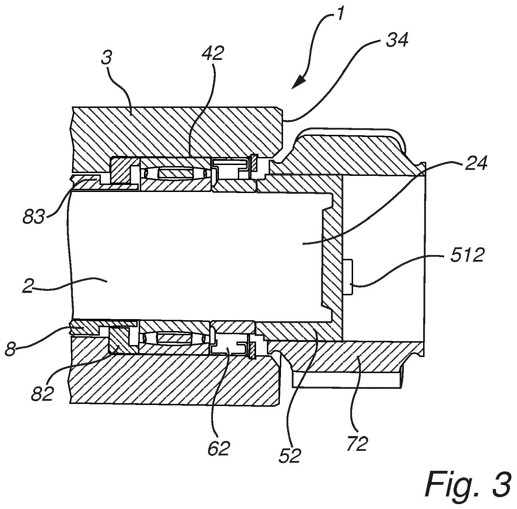

Figure 3 shows a three dimensional enlarged cross sectional view of an end section of a roll module 1 according to an embodiment of the invention. The figure shows a shaft 2, a roll mantle 3 with an end section 34, a second locking means 52, a bearing 42, a seal 62, a rotational fixation means 512. The roll module 1 is supported in an intermediate support block 72 by insertion of the shaft protrusion 24 into a through-hole of the intermediate support block 72, and wherein the locking means 52 is located on the shaft protrusion 24. In this embodiment, the locking means 52 is designed as a cap in one-piece but it may also be designed in other ways. For example, the locking means may be split into several parts, such as a sleeve shaped member and an axial side plate. In another embodiment, there is no side surface, or axial side plate, on the locking means. Instead the locking means may only be designed as a sleeve. In such an embodiment a rotational fixation means may instead be located directly onto the axial side face of the shaft 2. As can further be seen in figure 3, a spacer sleeve 8 and a dismounting ring 82 is seen. These can be used to dismount the toroidal roller bearing 42 by pushing on the outer ring and the inner ring of the bearing 42 simultaneously. As can be seen in this embodiment, the sleeve 8 is designed to be able to push on the inner ring of the bearing 42 and the dismounting ring 82 is designed to be able to push on the outer ring of the bearing 42. By pushing on the sleeve 8 also the dismounting ring 82 will eventually be pushed via an axial side face 83 on the sleeve 8. The dismounting ring may also be designed so that it can push on both the inner and outer ring of the bearing 42.

Figure 4 shows a cross sectional view of a roll line 10 according to an embodiment of the invention. The roll line comprises three roll modules 1, 1 and 1 arranged in an axial extension and supported by two intermediate support blocks 71 and 72 and two end support blocks 73 and 74. Rotational fixation means mounted on outer end of end supports 73 and 74 in fig 4. will rotationally fix the shafts of the three modules 1, 1 and 1. In addition, the roll line 10 is designed so that axial clearances 101 and 102 is present in-between the shaft protrusions in the intermediate support blocks 71 and 72. By this the roll line 10 will be able to accommodate any length variations due to e.g. temperature variations of the shafts.

## Claims

1. A roll line (10) for a continuous casting machine, comprising,
- at least two roll modules (1, 1),
- wherein each roll module (1) comprises,
- a shaft (2) extending in an axial direction and presenting a first and a second axial end (21, 22),
- a roll mantle (3), presenting a cylindrically shaped outer peripheral surface (31) extending in an axial direction and a cylindrically shaped inner peripheral surface (32) extending in the same axial direction, wherein the roll mantle further presents a first and a second axial end (33, 34),
- a first and a second bearing (41, 42) mounted in-between the shaft (2) and the inner peripheral surface (32) of the roll mantle (3), such that the first and second bearing (41, 42) allows a relative rotation between the shaft (2) and the roll mantle (3),
- wherein the first and second axial end of the shaft (21, 22) is extending axially outside the first and second axial end (33, 34) of the roll mantle respectively, such that the shaft (2) presents a first and a second axially extending shaft protrusion (23, 24),
- wherein the roll module (1) further comprising a first and a second locking means (51, 52) for axially locking the first and second bearing (41, 42) and the roll mantle (3) to the shaft (2), the first and second locking means (51, 52) being located at least partly on the first and second respective shaft protrusion (23 ,24), wherein the first locking means intersect a plane being orthogonal to the axial direction of the shaft and axially located at the first axial end of the roll mantle, and wherein the second locking means intersect a plane being orthogonal to the axial direction of the shaft and axially located at the second axial end of the roll mantle,
- wherein the roll modules (1, 1) are subsequently located along an axial line and wherein the at least two roll modules (1) are supported in two end support blocks (73, 74) and at least one intermediate support block (71, 72),
- wherein the at least one intermediate support block (71, 72) presents an axial through-hole for receiving two opposing shaft protrusions (23, 24) of two of the at least two roll modules (1, 1).

2. A roll line (10) according to claim 1, wherein at least one of the at least two roll modules (1, 1) further comprising,
- sealing means (61, 62) located axially outside the first and second bearing (41, 42) for sealing off a space between the inner peripheral surface (32) and the shaft (2), thereby creating a self-contained sealed unit.

3. A roll line (10) according to any of the preceding claims,
- wherein at least one of the first and second locking means (51, 52), of at least one of the at least two roll modules (1, 1), is a cylindrically shaped sleeve member.

4. A roll line (10) according to any of the preceding claims,
- wherein the shaft (2) presents an essentially similar diameter along its axial extension of at least one of the at least two roll modules (1, 1).

5. A roll line (10) according to any of the preceding claims,
- wherein at least one of the first and second locking means (51, 52), of at least one of the at least two roll modules (1, 1), is axially locked to the shaft (2) via a side face of the respective first or second axial end (21, 22) of the shaft (2).

6. A roll line (10) according to any of the preceding claims,
- wherein at least one of the locking means (51, 52), of at least one of the at least two roll modules (1, 1), is in the form of a cap meant to cover an essential part of its corresponding shaft protrusion (23, 24).

7. A roll line (10) according to any of the preceding claims,
- wherein an axial side face (21, 22) of at least one of the first or second axial end (23, 24) of the shaft (2), of at least one of the at least two roll modules (1, 1), presents a rotational fixation means (511, 512) meant to be rotationally fixed to another corresponding shaft (2) of another roll module (1).

8. A roll line (10) according to claim 2,
- wherein the at least one roll module (1) is filled with a lubricant in the space axially inside the sealing means (61, 62).

9. A roll line (10) according to claim 8,
- wherein the at least one roll module (1) is relubrication free.

10. A roll line (10) according to any of the preceding claims,
- wherein there is an axial clearance between the two opposing shaft protrusions(23, 24) in the through-hole.

11. A roll line (10) according to any of the preceding claims,
- wherein two of the at least two roll modules (1, 1) which are supported in the end support blocks (73, 74) are axially fixed in the end support blocks (73, 74).

## Patentansprüche

1. Walzlinie (10) für eine Stranggussmaschine, aufweisend,
- mindestens zwei Walzmodule (1, 1),
- wobei jedes Walzmodul (1) aufweist,
- eine Welle (2), welche sich in einer axialen Richtung erstreckt und ein erstes und ein zweites axiales Ende (21, 22) aufweist,
- einen Walzenmantel (3), welcher eine zylindrisch geformte äußere Umfangsfläche (31), welche sich in einer axialen Richtung erstreckt, und eine zylindrisch geformte innere Umfangsfläche (32) aufweist, welche sich in der gleichen axialen Richtung erstreckt, wobei der Walzenmantel ferner ein erstes und ein zweites axiales Ende (33, 34) aufweist,
- ein erstes und ein zweites Lager (41, 42), welches zwischen der Welle (2) und der innere Umfangsfläche (32) des Walzenmantels (3) montiert ist, so dass das erste und zweite Lager (41, 42) eine relative Drehung zwischen der Welle (2) und dem Walzenmantel (3) ermöglicht,
- wobei das erste und zweite axiale Ende der Welle (21, 22) sich axial außerhalb des ersten und zweiten axialen Endes (33, 34) des Walzenmantels jeweils erstreckt, so dass die Welle (2) einen ersten und einen zweiten sich axial erstreckenden Wellenüberstand (23, 24) aufweist,
- wobei das Walzmodul (1) ferner ein erstes und ein zweites Verriegelungsmittel (51, 52) zum axialen Verriegeln des ersten und des zweiten Lagers (41, 42) und des Walzenmantels (3) mit der Welle (2) aufweist, wobei das erste und zweite Verriegelungsmittel (51, 52) zumindest teilweise an dem ersten und zweiten Wellenüberstand (23, 24) jeweils angeordnet sind, wobei das erste Verriegelungsmittel eine Ebene, welche senkrecht zu der axialen Richtung der Welle verläuft und axial an dem ersten axialen Ende des Walzenmantels angeordnet ist, schneidet, und wobei das zweite Verriegelungsmittel eine Ebene, welche senkrecht zu der axialen Richtung der Welle verläuft und axial an dem zweiten axialen Ende des Walzenmantels angeordnet ist, schneidet,
- wobei die Walzmodule (1, 1) nacheinander entlang einer axialen Linie angeordnet sind und wobei die mindestens zwei Walzmodule (1) in zwei Endlagerblöcken (73, 74) und an mindestens einem Zwischenlagerblock (71, 72) gehalten sind,
- wobei der mindestens eine Zwischenlagerblock (71, 72) eine axiales Durchgangsloch zum Aufnehmen von zwei gegenüber liegenden Wellenüberständen (23, 24) von zwei der mindestens zwei Walzmodule (1, 1) aufweist.

2. Walzlinie (10) gemäß Anspruch 1, wobei mindestens eines der mindestens zwei Walzmodule (1, 1) ferner aufweist,
- Dichtmittel (61, 62), welche axial außerhalb des ersten und zweiten Lagers (41, 42) zum Abdichten eines Zwischenraums zwischen der inneren Umfangsfläche (32) und der Welle (2) angeordnet sind, wodurch eine in sich geschlossene, abgedichtete Einheit geschaffen wird.

3. Walzlinie (10) gemäß einem der vorhergehenden Ansprüche,
- wobei mindestens eines von dem ersten und zweiten Verriegelungsmittel (51, 52) von mindestens einem der mindestens zwei Walzmodule (1, 1) ein zylindrisch geformtes Hülsenelement ist.

4. Walzlinie (10) gemäß einem der vorhergehenden Ansprüche,
- wobei die Welle (2) einen im wesentlichen ähnlichen Durchmesser entlang ihrer axialen Erstreckung wie mindestens eines der mindestens zwei Walzenmodule (1, 1) aufweist.

5. Walzlinie (10) gemäß einem der vorhergehenden Ansprüche,
- wobei mindestens eines des ersten und zweiten Verriegelungsmittels (51, 52) von mindestens einem der mindestens zwei Walzmodule (1, 1) axial mit der Welle (2) über eine Seitenfläche des jeweiligen ersten oder zweiten axialen Endes (21, 22) der Welle (2) verriegelt ist.

6. Walzlinie (10) gemäß einem der vorhergehenden Ansprüche,
- wobei mindestens eines der Verriegelungsmittel (51, 52) von mindestens einem der mindestens zwei Walzmodule (1, 1) in der Form einer Kappe vorliegt, welche dafür bestimmt ist, einen wesentlichen Teil seines entsprechenden Wellenüberstands (23, 24) abzudecken.

7. Walzlinie (10) gemäß einem der vorhergehenden Ansprüche,
- wobei eine axiale Seitenfläche (21, 22) von mindestens einem von dem ersten oder zweiten axialen Ende (23, 24) der Welle (2) von mindestens einem der mindestens zwei Walzmodule (1, 1) ein Drehbefestigungsmittel (511, 512) aufweist, welches dafür bestimmt ist, an einer entsprechenden anderen Welle (2) eines anderen Walzmoduls (1) drehfest befestigt zu sein.

8. Walzlinie (10) gemäß Anspruch 2,
- wobei das mindestens eine Walzmodul (1) in dem Raum axial innerhalb des Dichtmittels (61, 62) mit einem Schmiermittel gefüllt ist.

9. Walzlinie (10) gemäß Anspruch 8,
- wobei das mindestens eine Walzmodul (1) frei von Nachschmierung ist.

10. Walzlinie (10) gemäß einem der vorhergehenden Ansprüche,
- wobei es in dem Durchgangsloch ein axiales Spiel zwischen den beiden gegenüber liegenden Wellenüberständen (23, 24) gibt.

11. Walzlinie (10) gemäß einem der vorhergehenden Ansprüche,
- wobei zwei der mindestens zwei Walzmodule (1, 1), welche in den Endlagerblöcken (73, 74) gehalten sind, axial in den Endlagerblöcken (73, 74) befestigt sind.

## Revendications

1. Ligne (10) de cylindres pour une machine de coulée continue, comprenant au moins deux modules (1, 1) de cylindre,
dans laquelle chaque module (1) de cylindre comprend,
- un arbre (2) s'étendant dans une direction axiale et présentant une première et une seconde extrémité axiale (21, 22) ;
- une chemise extérieure (3) de cylindre, présentant une surface périphérique extérieure (31) de forme cylindrique s'étendant dans la direction axiale et une surface périphérique intérieure (32) de forme cylindrique s'étendant dans la même direction axiale, dans laquelle la chemise extérieure de cylindre présente en outre une première et une seconde extrémité axiale (33, 34),
- un premier et un second roulement (41, 42) montés entre l'arbre (2) et la surface périphérique intérieure (32) de la chemise extérieure (3) du cylindre, de telle sorte que le premier et le second roulement (41, 42) permettent une rotation relative entre l'arbre (2) et la chemise extérieure (3) du cylindre,
dans laquelle la première et la seconde extrémité axiale (21, 22) de l'arbre s'étendent axialement à l'extérieur respectivement de la première et de la seconde extrémité axiale (33, 34) de la chemise extérieure de cylindre, de telle sorte que l'arbre (2) présente une première et une seconde protubérance (23, 24) d'arbre s'étendant axialement,
dans laquelle le module (1) de cylindre comprend en outre un premier et un second moyen de verrouillage (51, 52) pour verrouiller axialement le premier et le second roulement (41, 42) et la chemise extérieure (3) du cylindre sur l'arbre (2), les premier et second moyens de verrouillage (51, 52) étant situés au moins partiellement sur la première et la seconde protubérance (23, 24) respective d'arbre,
dans laquelle le premier moyen de verrouillage coupe un plan qui est perpendiculaire à la direction axiale de l'arbre et situé axialement au niveau de la première extrémité axiale de la chemise extérieure de cylindre, et
dans laquelle le second moyen de verrouillage coupe un plan qui est perpendiculaire à la direction axiale de l'arbre et situé axialement au niveau de la seconde extrémité axiale de la chemise extérieure de cylindre, dans laquelle les modules (1, 1) de cylindre sont ultérieurement situés le long d'une ligne axiale,
dans laquelle lesdits modules (1) de cylindre sont soutenus dans deux blocs de support (73, 74) terminaux et au moins un bloc de support (71, 72) intermédiaire, et
dans laquelle ledit bloc de support (71, 72) intermédiaire présente un trou traversant axial pour recevoir deux protubérances (23, 24) d'arbre opposées de deux des dits modules (1, 1) de cylindre.

2. Ligne (10) de cylindres selon la revendication 1, dans laquelle au moins un des dits modules (1, 1) de cylindre comprend en outre un moyen d'étanchéité (61, 62) situé axialement à l'extérieur du premier et du second roulement (41, 42) pour fermer hermétiquement un espace entre la surface périphérique intérieure (32) et l'arbre (2), créant de ce fait une unité étanche autonome.

3. Ligne (10) de cylindres selon l'une quelconque des revendications précédentes, dans laquelle au moins un des premier et second moyens de verrouillage (51, 52) d'au moins un des dits modules (1, 1) de cylindre est un élément de manchon de forme cylindrique.

4. Ligne (10) de cylindres selon l'une quelconque des revendications précédentes, dans laquelle l'arbre (2) présente un diamètre pour l'essentiel semblable suivant son extension axiale d'au moins un des dits modules (1, 1) de cylindre.

5. Ligne (10) de cylindres selon l'une quelconque des revendications précédentes, dans laquelle au moins un des premier et second moyens de verrouillage (51, 52) d'au moins un des dits modules (1, 1) de cylindre est verrouillé axialement à l'arbre (2) par l'intermédiaire de la face latérale respectivement de la première ou de la seconde extrémité axiale (21, 22) de l'arbre (2).

6. Ligne (10) de cylindres selon l'une quelconque des revendications précédentes, dans laquelle au moins un des moyens de verrouillage (51, 52) d'au moins un des dits modules (1, 1) de cylindre se présente sous la forme d'un capuchon conçu pour couvrir une part essentielle de sa protubérance (23, 24) d'arbre correspondante.

7. Ligne (10) de cylindres selon l'une quelconque des revendications précédentes, dans laquelle une face latérale axiale (21, 22) des première et/ou seconde extrémités axiales (23, 24) de l'arbre (2) d'au moins un des dits modules (1, 1) de cylindre présente un moyen (511, 512) de fixation en rotation conçu pour être fixé en rotation à un autre arbre (2) correspondant d'un autre module (1) de cylindre.

8. Ligne (10) de cylindres selon la revendication 2, dans laquelle ledit module (1) de cylindre est rempli d'un lubrifiant dans l'espace axialement à l'intérieur du moyen d'étanchéité (61, 62).

9. Ligne (10) de cylindres selon la revendication 8, dans laquelle ledit module (1) de cylindre n'a pas besoin de lubrification périodique.

10. Ligne (10) de cylindres selon l'une quelconque des revendications précédentes, dans laquelle il y a un jeu axial entre les deux protubérances (23, 24) d'arbre opposées dans le trou traversant.

11. Ligne (10) de cylindres selon l'une quelconque des revendications précédentes, dans laquelle deux des dits modules (1, 1) de cylindre qui sont soutenus dans les blocs de support (73, 74) terminaux sont fixes axialement dans les blocs de support (73, 74) terminaux.
